# FASCICULE DE BREVET EUROPEEN

(11) **EP 2 244 924 B1**
(45) Date de publication et mention de la délivrance du brevet: **28.10.2015**
(21) Numéro de dépôt: 09703528.1
(22) Date de dépôt: 16.01.2009
(51) Int. Cl.: B60B 33/00, B60B 33/02, B60B 33/06

(54) **CHÂSSIS DE POUSSETTE, NOTAMMENT POUR TRANSPORTER UN ENFANT**
KINDERWAGENRAHMEN, INSBESONDERE FÜR DEN TRANSPORT EINES KINDES
STROLLER FRAME, PARTICULARLY FOR TRANSPORTING A CHILD

(30) Priorité: 17.01.2008 FR 0850283
(43) Date de publication de la demande: 03.11.2010
(73) Titulaire: BABYZEN, 13770 Venelles (FR)
(72) Inventeur: Chaudeurge, Jean-Michel François, 83170 Tourves (FR)
(74) Mandataire: Grand, Guillaume
(86) Numéro de dépôt international: PCT/FR2009/050059
(87) Numéro de publication internationale: WO 2009/092970

(56) Documents cités:
- WO-A-03/097466
- WO-A1-2008/099095
- DE-U1- 20 203 348
- US-A- 5 647 601

## Description

La présente invention concerne un châssis de poussette. Elle concerne en particulier le domaine des poussettes de transport d'un enfant en bas âge.

Pour pousser sur le sol une poussette, son châssis est typiquement équipé de roues ou roulettes. L'invention a trait en particulier aux châssis de poussette dits « à trois roues », c'est-à-dire, munis, à l'avant, d'une seule roue ou d'une seule paire de roues jumelées, tandis que, à l'arrière du châssis, sont prévues de manière distincte deux roues ou deux paires de roues jumelées, respectivement sur les côtés gauche et droit du châssis. Ce type de châssis de poussette est très apprécié car il confère à la poussette un aspect d'ensemble particulièrement avenant, à connotation sportive, qui séduit particulièrement une clientèle jeune, d'autant que faire appuyer le châssis sur le sol au niveau de trois zones formant les sommets d'un triangle pointé vers l'avant confère au châssis une grande maniabilité. Ce genre de châssis de poussette est ainsi reconnu pour son bon comportement de roulement sur des chemins de campagne et des sols accidentés, notamment dans les grandes villes où les poussettes doivent franchir des trottoirs, des escaliers, etc.

Toutefois, les châssis de poussette à trois roues existants présentent un inconvénient majeur lié à leur encombrement : ce type de châssis impose, pour des raisons de confort et de sécurité, de prévoir que les roues présentent un diamètre relativement grand. Dans ces conditions, certains utilisateurs renoncent à l'achat de ce type de châssis de poussette tant il est difficile à ranger et à transporter lorsque la poussette n'est pas en service, ainsi qu'à être chargé et déchargé de véhicules de transport.

Dans le domaine des poussettes dites traditionnelles en opposition aux poussettes à trois roues, c'est-à-dire dans le domaine des poussettes dont le châssis est « à quatre roues », on connaît des châssis permettant d'escamoter les deux roues avant et les deux roues arrière, notamment à des fins de rangement de la poussette. Par exemple, dans le document récent WO-A-2007/025551, les roues avant et arrière d'un même côté gauche ou droit d'une poussette peuvent être simultanément déplacées, par rapport au châssis de la poussette, d'une position déployée de service, dans laquelle les roues s'étendent à la verticale pour rouler sur le sol, à une position escamotée de stockage, dans laquelle les roues s'étendent à l'horizontale pour être plaquées contre le châssis. D'autres exemples de châssis de poussette à quatre roues ainsi escamotables sont fournis par les documents plus anciens FR-A-525 797, US-A-2 429 763 et US-A-4 659 096.

En pratique, l'enseignement relatif aux châssis de poussette à quatre roues n'est cependant pas transposable à un châssis de poussette à trois roues du fait de la structure spécifique de ce châssis consistant essentiellement en un unique bras avant et en deux bras arrière, respectivement gauche et droit. Ainsi, WO-A-03/097466 propose un châssis de poussette dont les trois roues peuvent être déplacées d'une position déployée de service à une position escamotée de stockage, mais ce uniquement de manière, à la fois, successive, c'est-à-dire une roue après l'autre, et compliquée, c'est-à-dire au bout de plusieurs actions manuelles de la part de l'utilisateur en plusieurs zones différentes du chassis de poussette.

Le but de la présente invention est de proposer un châssis de poussette « à trois roues » du type évoqué ci-dessus, dont toutes les roues peuvent être escamotées de manière rapide, simple et facile.

A cet effet, l'invention a pour objet un châssis de poussette, notamment pour transporter un enfant, tel que défini à la revendication 1.

L'idée à la base de l'invention est de mettre à profit la structure particulière du châssis de poussette « à trois roues » pour fournir à l'utilisateur une poignée de commande pratique, permettant spécifiquement d'escamoter toutes les roues. Grâce à cette poignée, l'utilisateur est en mesure d'appliquer facilement et rapidement un effort d'entraînement que les moyens de déplacement, intégrés au châssis, transmettent mécaniquement, dans la région avant du châssis, jusqu'à la roue avant ou au train de roues avant jumelées, et, dans la région arrière du châssis, jusqu'aux deux roues arrière ou aux deux trains de roues arrière jumelées, respectivement gauche et droit. Cette poignée permet à l'utilisateur d'appliquer de préférence un couple d'entraînement en entrée des moyens de déplacement, avantageusement d'une seule main. La nature mécanique des bras, des moyens de déplacement et de la poignée rend le châssis de poussette robuste et fiable, les déplacements relatifs entre les roues et les bras étant précis, rapides et reproductibles.

Lorsque les roues sont dans leur position escamotée de stockage, l'encombrement du châssis se trouve notablement réduit, à la fois dans la direction suivant laquelle les corps des roues et le châssis sont alors disposés en plan superposés, et dans la direction antéro-postérieure du châssis en raison du rapprochement vers l'avant des roues arrière.

En positionnant la poignée de commande à l'extrémité avant du châssis, cette poignée peut être saisie manuellement par l'utilisateur de façon rapide et facile. Cette poignée forme alors vis-à-vis de l'utilisateur un élément de référence pour ce qui concerne le positionnement mécanique des constituants mobiles de la poussette : selon l'entraînement qu'impose l'utilisateur à cette poignée, toutes les roues de la poussette s'escamotent ou se déploient en même temps, en étant respectivement accompagnées d'un « raccourcissement » ou d'un « allongement » du châssis, c'est-à-dire d'un rapprochement ou d'un éloignement des roues arrière par rapport à la roue avant, grâce à l'action des moyens de déplacement.

En outre, la poignée avant permet, lorsque les roues sont dans leur position escamotée de stockage, de soulever le châssis par rapport au sol, par exemple pour le charger dans un coffre de voiture, ou de le tirer sur le sol. D'ailleurs, suivant une caractéristique avantageuse du châssis de poussette selon l'invention, lorsque les roues sont dans leur position escamotée, les roues arrière s'étendent sensiblement dans un même plan perpendiculaire au plan médian antéro-postérieur du châssis et sont aptes à rouler sur le sol dans ce même plan. De la sorte, lorsque les roues sont escamotées, les roues arrière sont à même de reposer en ligne sur le sol, ce qui permet à la poussette d'être stabilisée à la verticale, pour être très facilement tractée ou poussée latéralement grâce à la poignée située alors au sommet du châssis, notamment à des fins de rangement dans un placard ou analogue, à la façon d'un bagage-trolley. En pratique, l'utilisateur peut alors commander l'escamotage des roues de telle sorte que les roues arrière restent en appui sur le sol pendant leur escamotage, tandis qu'il redresse progressivement le châssis à la verticale, avec son extrémité avant dirigée vers le haut. De cette façon, l'escamotage des roues aboutit automatiquement à passer le châssis en position verticale de rangement stable.

D'autres caractéristiques avantageuses du châssis de poussette selon l'invention, prises isolément ou selon toutes les combinaisons techniquement possibles, sont spécifiées aux revendications dépendantes 2 à 15.

L'invention sera mieux comprise à la lecture de la description qui va suivre, donnée uniquement à titre d'exemple et faite en se référant aux dessins sur lesquels :
- La figure 1 est une vue schématique en élévation latérale d'un châssis de poussette conforme à l'invention, dans une configuration de service ;
- La figure 2 est une coupe partielle selon la ligne II-II de la figure 1 ;
- La figure 3 est une vue analogue à la figure 1, illustrant le châssis de poussette dans une configuration de stockage ;
- La figure 4 est une coupe partielle selon la ligne IV-IV de la figure 3 ;
- La figure 5 est une vue à plus grande échelle du détail V de la figure 4;
- La figure 6 est une vue analogue à la figure 5, illustrant l'extrémité avant du châssis de la poussette dans un état bloqué par rapport à l'état débloqué illustré à la figure 5 ;
- La figure 7 est une vue en perspective de l'extrémité avant du châssis de poussette ;
- Les figures 8 et 9 sont respectivement des vues à plus grande échelle des détails VIII et IX des figures 2 et 4 ;
- La figure 10 est une vue en perspective de l'extrémité arrière gauche du châssis ;
- La figure 11 est une vue schématique en élévation selon la flèche XII de la figure 2, d'une partie du châssis ;
- La figure 12 est une vue analogue à la figure 11, illustrant la partie observée du châssis lorsque ce dernier est dans sa configuration des figures 3 et 4 ;
- la figure 13 est une vue éclatée en perspective et partiellement en coupe, illustrant une première variante de réalisation conforme à l'invention ;
- la figure 14 est une vue en perspective des composants représentés sur la figure 13, dans une configuration assemblée ;
- la figure 15 est une vue schématique partiellement en coupe, sensiblement analogue à la figure 8, illustrant une deuxième variante de réalisation conforme à l'invention, qui est d'ailleurs combinée à la variante des figures 13 et 14 ;
- la figure 16 est une coupe schématique, dans un plan parallèle à celui de la coupe partielle de la figure 15, illustrant une troisième variante de réalisation conforme à l'invention, relative à la partie du châssis concernée par les figures 11 et 12, cette troisième variante étant d'ailleurs combinée avec la variante montrée à la figure 15 ;
- la figure 17 est une vue en élévation selon la flèche XVII de la figure 16, montrant seulement certains composants de la figure 16 ;
- la figure 18 est une coupe schématique selon la ligne XVIII-XVIII de la figure 17 ; et
- la figure 19 est une vue analogue à la figure 18, illustrant les composants de la figure 17 dans une configuration de fonctionnement différente de celle montrée à la figure 18.

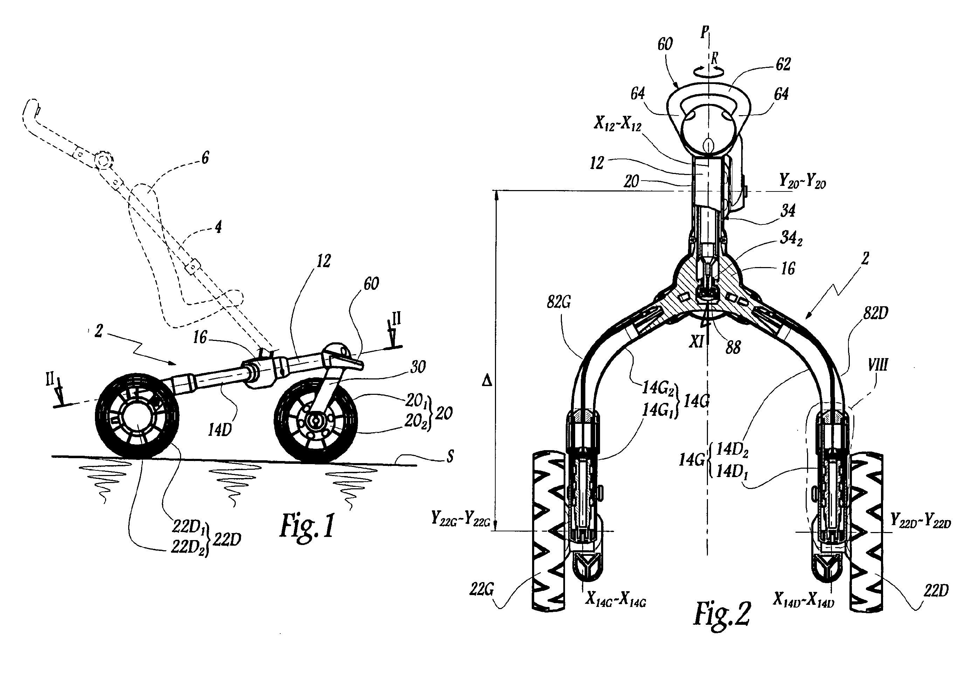

Sur les figures est représenté un châssis 2 d'une poussette destinée à transporter un enfant en bas âge, en étant poussée sur le sol S par un adulte. Comme représenté de manière très schématique à la figure 1 uniquement, cette poussette comporte, en plus du châssis 2, un cadre 4 sur lequel est ici rapporté et fixé une assise 6 dans laquelle l'enfant transporté se tient assis, étant remarqué que, pour la clarté du dessin, l'enfant n'est pas représenté. En variante non représentée, l'assise 6 est remplacée par un couchage, permettant de transporter l'enfant en position allongée, ou par un autre élément de transport analogue non limitatif de la présente invention. En pratique, le cadre 4 peut présenter des structures très diverses, incluant ou non des composants articulés les uns par rapport aux autres, étant entendu que chacune de ces structures est supportée par le châssis 2 de manière articulée et/ou amovible, en particulier à des fin de pliage et/ou de stockage de la poussette lors des périodes durant lesquelles celle-ci n'est pas utilisée pour transporter l'enfant.

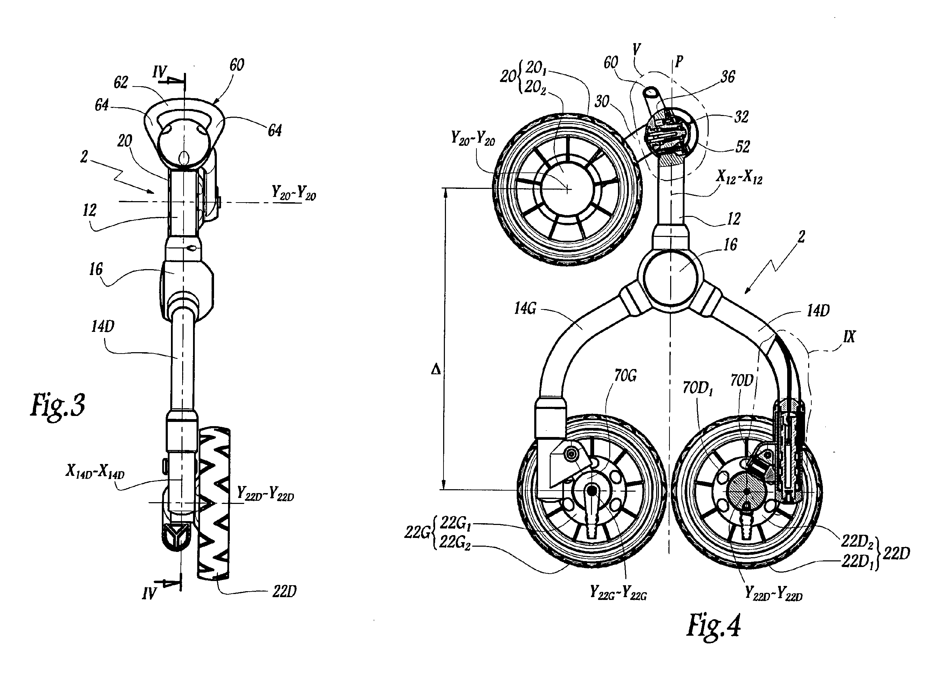

Par commodité, la suite de la description est orientée par rapport au châssis de poussette 2 lorsque ce dernier est dans sa configuration de service illustrée aux figures 1 et 2, de sorte que les termes « supérieur » et « haut » désignent une direction dirigée à l'opposé du sol S et correspondant à la partie haute de la figure 1, tandis que les termes « inférieur » et « bas » désignent une direction opposée. De même, les termes « avant » et « arrière » s'entendent par rapport à la direction normale d'avancée de la poussette, c'est-à-dire la direction suivant laquelle cette poussette est normalement poussée, de sorte que l'avant correspond à la partie droite de la figure 1 et la partie haute des figures 2 à 4. De la même façon, les termes « gauche » et « droit » sont définis par rapport à la direction d'avancée de la poussette, de sorte qu'ils désignent respectivement les parties gauche et droite des figures 2 et 4.

Le châssis 2 comporte une ossature rigide non articulée 10, qui inclut un unique bras avant 12, deux bras arrière gauche 14G et droit 14D, et un tronc central 16. Les bras 12, 14G et 14D présentent chacun une forme essentiellement tubulaire, s'étendant en longueur globalement suivant la direction antéro-postérieure du châssis 2. Le bras avant 12 est rectiligne sur toute sa longueur, tandis que les bras arrière gauche 14G et droit 14D convergent l'un vers l'autre vers l'avant de telle sorte que chacun de ces bras est constitué d'une partie arrière rectiligne 14G₁, 14D₁, centrée sur un axe longitudinal X_{14G}-X_{14G}, X_{14D}-X_{14D} et prolongée vers l'avant par une partie coudée 14G₂, 14D₂ en direction du tronc 16. Les bras arrière gauche 14G et droit 14D sont avantageusement symétriques l'un de l'autre par rapport à un plan vertical médian antéro-postérieur P du châssis 2, ce plan passant par l'axe longitudinal central X₁₂-X₁₂ du bras avant 12.

Le tronc central 16 comporte un corps principal rigide partiellement creux, duquel sont solidaires l'extrémité arrière du bras avant 12 et les extrémités avant respectives des bras arrière 14G et 14D, en débouchant à l'intérieur. Dans l'exemple considéré aux figures, le bras 12 est venu de matière avec le corps du tronc 16 tandis que les bras arrière 14G et 14D sont rapportés et fixés à ce corps, avec mise en place d'un capotage extérieur, en particulier à des fins esthétiques.

Pour pousser la poussette 1 sur le sol S, le châssis 2 est pourvu de trois roues d'appui au sol, à savoir une roue avant 20 et deux roues arrière, respectivement gauche 22G et droite 22D, prévues rotatives autour d'axes de rotation respectifs Y₂₀-Y₂₀, Y_{22G}-Y_{22G}, Y_{22D}-Y_{22D}. En pratique, chacune de ces roues peut présenter des formes de réalisation diverses, tant en ce qui concerne sa partie périphérique extérieure 20₁, 22G₁, 22D₁ destinée à rouler sur le sol, qui peut être, par exemple, constituée d'une gaine en caoutchouc ou d'un pneu à chambre à air, qu'en ce qui concerne son corps central discoïdal 20₂, 22G₂, 22D₂, éventuellement ajouré ou rayonné, dont l'axe géométrique central correspond à l'axe de rotation Y₂₀-Y₂₀, Y_{22G}-Y_{22G}, Y_{22D}-Y_{22D}.

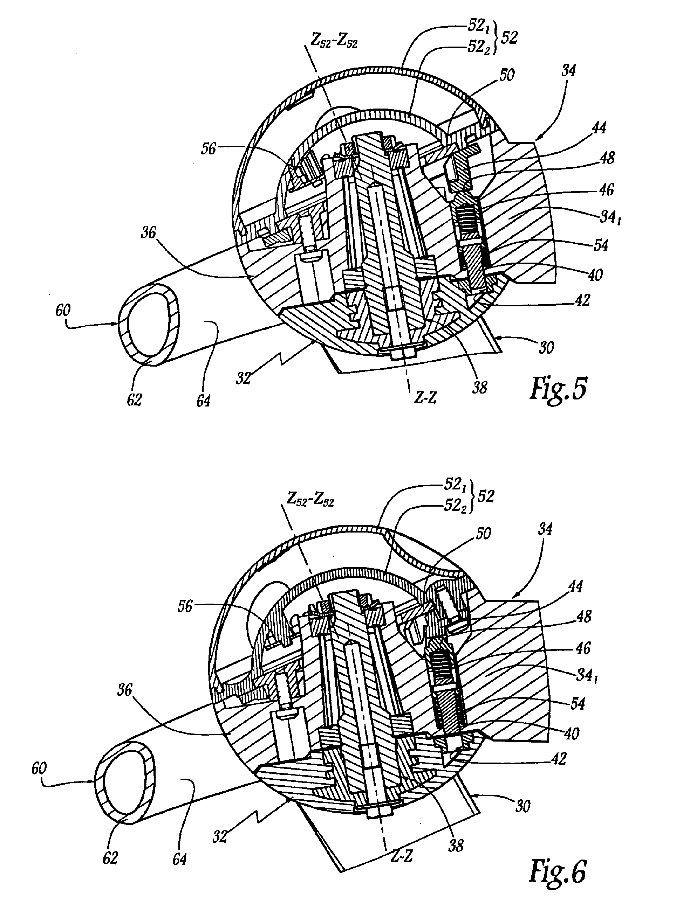

Comme bien visible sur les figures 1 et 4 et comme représenté plus en détail sur les figures 5 à 7, la roue avant 20 est reliée au bras avant 12 par, successivement, une patte rigide 30 et un ensemble d'articulation mécanique 32. Plus précisément, le corps de roue 20₂ est monté rotatif autour de l'axe Y₂₀-Y₂₀ sur un moyeu formé par une extrémité longitudinale 30₁ de la patte 30, cette dernière s'étendant en longueur suivant une direction radiale à cet axe. Le bras 12 est muni intérieurement d'un arbre 34 qui s'étend sur toute la longueur du bras, en étant centré sur son axe X₁₂-X₁₂. Pour des raisons de tenue mécanique, le diamètre extérieur de cet arbre 34 est ajusté au diamètre intérieur du bras 12. L'extrémité avant 34₁ de l'arbre 34 est prolongée vers l'avant, à l'extérieur du bras 12, par un embout 36 de support de l'ensemble d'articulation 32. Ici, l'embout 36 est lié rigidement à l'extrémité d'arbre 34₁, en étant venu de matière avec cette extrémité, et est conformé en une sphère creuse, tronquée à la fois du côté d'où s'étend la patte 30 et du côté opposé. A l'intérieur de cette sphère formée par l'embout 36 est agencée une articulation de pivot 38 entre cet embout et l'extrémité 30₂ de la patte 30, opposée à la roue 20 : cette articulation 38 permet le libre pivotement de l'extrémité 30₂ par rapport à l'embout 36 et donc par rapport à l'arbre 34 autour d'un axe Z-Z sensiblement perpendiculaire à l'axe X₁₂-X₁₂. De cette façon, notamment lorsque le châssis de poussette 2 roule sur le sol S, la patte 30 et, par là, la roue avant 20 peuvent pivoter autour de l'axe Z-Z, le chant supérieur de l'extrémité 30₂ glissant alors contre la face inférieure de l'embout 36, tandis que, suivant la direction longitudinale de la patte 30, cette dernière et l'embout 36 sont liés fixement l'un à l'autre.

L'articulation de pivot 38 peut être neutralisée dans le sens où elle peut être bloquée mécaniquement. Dans l'exemple de réalisation illustré en détail aux figures 5 et 6, ce blocage est réalisé par un pion 40 à même d'être reçu dans un logement complémentaire 42 délimité à l'extrémité 30₂ de la patte 30, dans le chant supérieur de cette extrémité : tant que le pion 40 est à l'extérieur du logement 42, comme à la figure 6, la patte 30 et l'embout 36 sont libres de pivoter l'un par rapport à l'autre autour de l'axe Z-Z, tandis que, lorsque le pion 40 est introduit dans le logement 42 comme à la figure 5, la patte 30 et l'embout 36 se trouvent liés rigidement l'un à l'autre, de telle sorte que l'axe de rotation Y₂₀-Y₂₀ s'étend alors de façon orthoradiale à l'axe X₁₂-X₁₂, comme sur les figures 1 à 4.

Le déplacement du pion 40 est commandé par un doigt pousseur 44, avec interposition d'un ressort de surcourse 46 logé partiellement dans une douille 48 montée à coulissement dans l'embout 36 suivant la direction de déplacement du pion 40. Sous l'action du ressort 46, le doigt pousseur 44 est plaqué, à l'opposé du pion 40, contre une platine 50 solidarisée fixement à l'embout 36, ici par des vis, en s'étendant globalement dans son plan de troncature opposé à la patte 30. Le doigt 44 est lié rigidement à un enjoliveur 52 monté sur l'embout 36 de manière mobile en rotation autour d'un axe Z₅₂-Z₅₂ à la fois perpendiculaire à la platine 50 et passant par le centre de la sphère formée par l'embout 36.

En entraînant en rotation l'enjoliveur 52 autour de l'axe Z₅₂, l'utilisateur entraîne sur une course correspondante le doigt 44 qui, en raison de son épaisseur variable suivant une direction périphérique à cet axe, agit sur le pion de blocage 40 : dans la configuration illustrée à la figure 5, la position de l'enjoliveur 52 autour de l'axe Z₅₂-Z₅₂ est telle qu'une épaisseur importante du doigt 44 est interposée entre la platine 50 et la douille 48, tandis que, dans la configuration de la figure 6, la position de l'enjoliveur est telle qu'une moindre épaisseur du doigt 44 est interposée, un ressort 54 rappelant alors le pion 40 en direction opposée au logement 42.

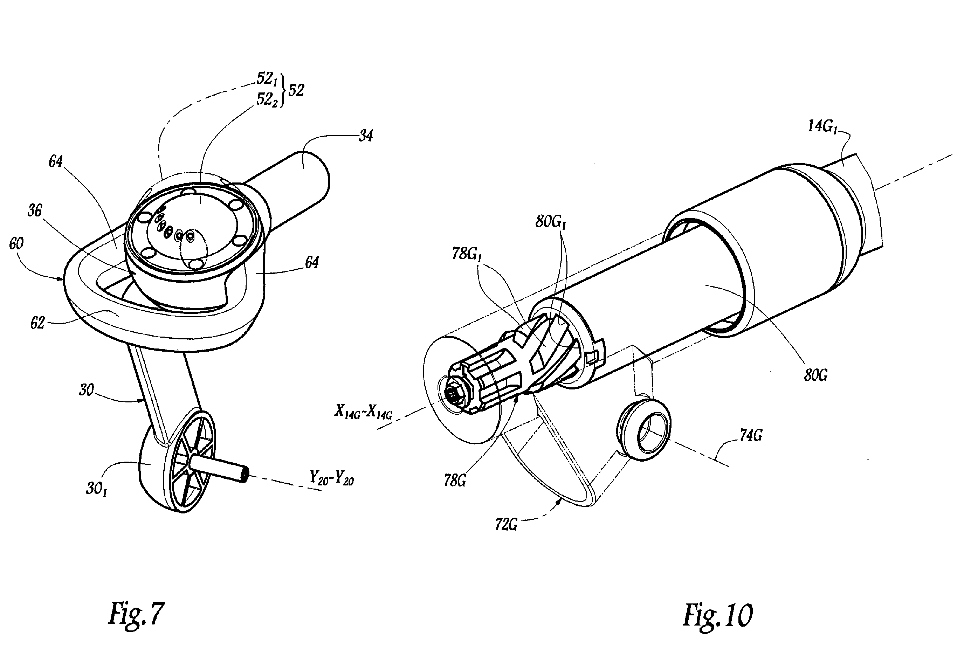

Pour faciliter la manipulation de l'enjoliveur 52, ainsi qu'à des fins esthétiques, cet enjoliveur présente une calotte externe 52₁ inscrite dans l'enveloppe sphérique définie par l'embout 36. De même, comme bien visible sur les figures 5 et 6, on notera que l'extrémité 30₂ de la patte 30 est conformée en une calotte sphérique inscrite dans l'enveloppe précitée, si bien que l'assemblage de cette extrémité 30₁, de l'embout 36 et de l'enjoliveur 52 donne une forme globale de boule, avec un effet de « signature » visuelle, propre au châssis de poussette 2, comme bien visible à la figure 7 sur laquelle la calotte externe 52₁ est représentée en traits fantômes pour observer l'intérieur de l'enjoliveur.

Avantageusement, une source lumineuse est agencée entre la platine et une calotte interne ajourée 52₂ de l'enjoliveur 52, de manière à disposer d'un feu d'avertissement lumineux. Des modalités détaillées pour réaliser un tel feu sont données dans WO-A-2006/111656 auquel le lecteur peut se référer.

Par ailleurs, comme bien visible sur les figures 1 à 7, l'embout 36 est prolongé, vers l'avant, par une poignée 60 liée rigidement à l'embout, en étant par exemple directement venue de matière avec l'embout. Avantageusement, cette poignée 60 se présente sous la forme d'un arceau dont le corps principal allongé 62 est situé du côté avant de l'embout 36, en s'étendant le long de la portion d'extrémité avant de l'embout et suivant une direction globalement périphérique à l'embout, tout en ménageant entre eux un espace suffisant pour que l'utilisateur puisse y introduire ses doigts afin de saisir le corps 62. A ses extrémités longitudinales, le corps 62 est relié rigidement aux côtés latéraux de l'embout 36 par des pattes 64 convergeant l'une vers l'autre en direction de l'embout 36.

A l'arrière du châssis 2, les corps 22G₂ et 22D₂ des roues 22G et 22D sont respectivement reliées aux parties rectilignes 14G₁ et 14D₁ des bras 14G et 14D suivant des aménagements décrits ci-dessous en détail pour le côté droit de la poussette, étant entendu que les aménagements du côté gauche se déduisent par symétrie par rapport au plan P et intègrent des constituants qui, sur les figures, notamment la figure 10, portent les mêmes références numériques que du côté droit mais suivies de la lettre G au lieu de la lettre D.

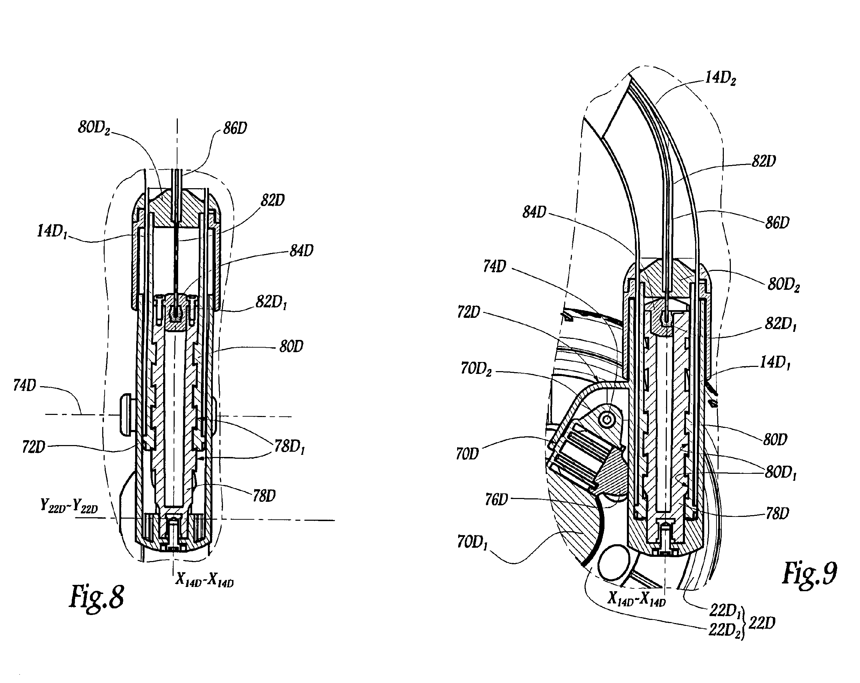

Comme représenté plus en détail sur les figures 8 et 9, le corps 22D₂ de la roue droite 22D est monté rotatif autour de l'axe Y_{22D}-Y_{22D} sur un moyeu formé par une extrémité longitudinale 70D₁ d'une patte 70D s'entend en longueur suivant une direction radiale à cet axe. Son extrémité 70D₂ opposée au corps de roue 22D₂ est, suivant la direction longitudinale de la patte, liée fixement à un fourreau 72D qui, à la fois, entoure coaxialement la partie rectiligne 14D₁ du bras 14D et s'étend partiellement en saillie arrière de cette partie. Avantageusement, la liaison entre la patte 70D et le fourreau 72D est articulée autour d'un axe de basculement 74D parallèle à l'axe de rotation Y_{22D}-Y_{22D}, permettant ainsi à la patte 70D d'être oscillante autour de cet axe par rapport au fourreau, avec interposition d'un tampon visco-élastique 76D à des fins d'amortissement. La roue arrière 22D se trouve ainsi suspendue par rapport à l'ossature 10 par la patte oscillante 70D, ce qui confère un grand confort de roulement à l'enfant transporté, même si l'état de surface du sol S est mauvais. Cette structure suspendue des roues arrière 22G et 22D permet en outre d'éviter d'agencer un essieu rigide reliant directement ces deux roues arrière, en travers de l'espace entre l'arrière des bras 14G et 14D. L'adulte qui pousse la poussette peut alors marcher confortablement, sans risque de butée lors de ses enjambées.

Le fourreau 72D est liée rigidement à un coulisseau 78D agencé de manière coaxiale à l'intérieur, à la fois, du fourreau 72D et de la partie rectiligne 14D₁. Dans l'exemple de réalisation considéré ici, le fourreau 72D et le coulisseau 78D sont liés l'un à l'autre au niveau de leur extrémité arrière. Le coulisseau 78D est monté mobile à l'intérieur d'une coulisse tubulaire 80D interposée coaxialement entre le coulisseau et la partie rectiligne 14D₁. Le coulisseau 78D est muni de nervures extérieure hélicoïdales 78D₁ qui s'enroulent autour de l'axe longitudinal du coulisseau, tandis que la face intérieure de la coulisse 80D délimite des rainures hélicoïdales complémentaires 80D₁ dans lesquelles sont reçues les nervures. De la sorte, le coulisseau 78D est apte à se déplacer à l'intérieur de la coulisse 80D suivant un mouvement hélicoïdal centré sur l'axe X_{14D}-X_{14D}.

La commande de l'entraînement du coulisseau 78D par rapport à la coulisse 80D est assurée par une corde de traction et de poussée 82D. L'extrémité arrière de cette corde 82D est munie d'un petit embout 82D₁ essentiellement sphérique et ainsi à même de tourner librement sur lui-même avec le reste de la corde 82D à l'intérieur d'une tête 84D à la fois fixée à l'extrémité avant du coulisseau 78D et lié fixement à la corde 82D suivant la direction longitudinale de cette corde.

La corde 82D s'étend vers l'avant à l'intérieur du bras 14D, la partie courante de cette corde étant reçue dans une gaine 86D coincée fixement à l'intérieur du bras. En particulier, l'extrémité arrière de cette gaine est coincée dans un embout d'extrémité avant fixe 80D₂ de la coulisse 80D, qui est traversé de part en part par la corde 82D.

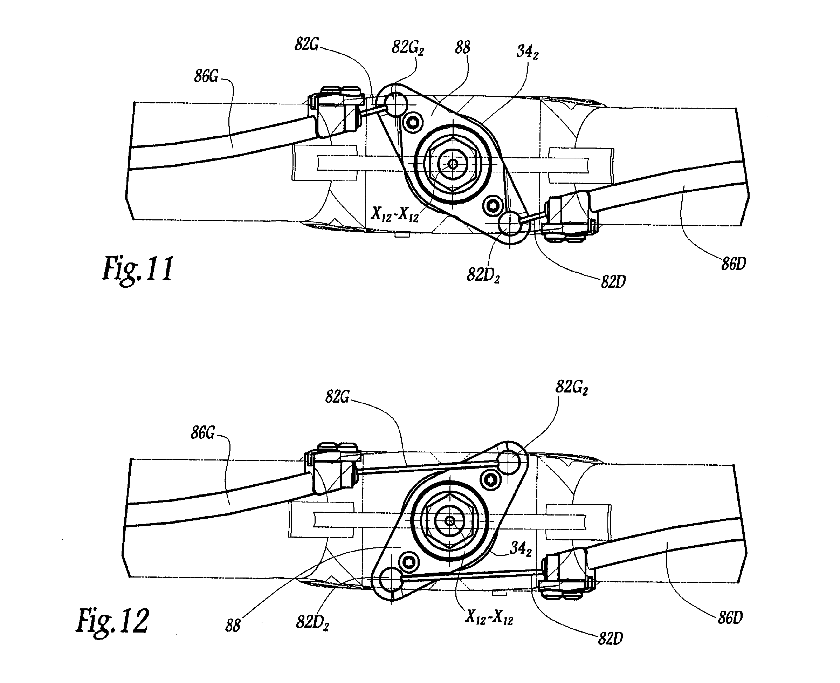

Comme représenté plus en détail sur les figures 11 à 13, les extrémités avant respectives 82D₂ et 82G₂ des cordes 82D et 82G sont fixées à un même volant 88 assemblé rigidement à l'extrémité arrière 34₂ de l'arbre 34. Plus précisément, le volant 88 est centré sur l'axe X₁₂-X₁₂, tandis que les extrémités arrière 82D₂ et 82G₂ des cordes 82D et 82G sont fixées en des zones du volant 88 diamétralement opposées par rapport à l'axe X₁₂-X₁₂.

La poignée 60 commande le déplacement des roues 20, 22G et 22D par rapport à l'ossature 10. Plus précisément, si on considère que les roues sont initialement dans leur position de service des figures 1 et 2, c'est-à-dire dans une position déployée par rapport à l'ossature 10, permettant de les faire rouler sur le sol S, avec leur axe de rotation Y₂₀-Y₂₀, Y_{22G}-Y_{22G} et Y_{22D}-Y_{22D} tous perpendiculaires au plan P, l'entraînement en rotation sur lui-même de l'arbre 34 autour de l'axe X₁₂-X₂ grâce à la manipulation correspondante de la poignée 60 par un utilisateur agrippant le corps 62, comme indiqué par la flèche R sur les figures 1 et 2, et ce sur une course angulaire de 90°, provoque l'escamotage combiné des trois roues comme expliqué ci-dessous. Autrement dit, pour ce faire, l'utilisateur saisit la poignée 60 et lui applique un couple d'entraînement d'un quart de tour, autour de l'axe X₁₂-X₁₂.

A l'avant du châssis 2, l'entraînement en rotation de l'extrémité avant 34₁ de l'arbre 34 provoque une rotation correspondante, sur une course angulaire de 90°, de l'embout 36 et, par là, de la patte 30 et du corps de roue 20₂. La roue 20 passe alors de sa position des figures 1 et 2 à sa position des figures 3 et 4, dans laquelle son axe de rotation Y₂₀-Y₂₀ s'étend parallèlement au plan P, étant remarqué que lors de cet escamotage de la roue, l'articulation de pivot 38 peut être bloquée grâce au pion de blocage 40 préalablement introduit dans le logement 42, comme expliqué plus haut.

A l'arrière du châssis de poussette 2, l'entraînement en rotation de l'extrémité arrière 34₂ de l'arbre 34 provoque une rotation de 90° autour de l'axe X₁₂-X₁₂ du volant 88, qui passe alors de sa position de la figure 11 à celle de la figure 12. Les cordes 82D et 82G sont alors tirées sur une course identique, entraînant la traction vers l'avant des coulisseaux 78D et 78G à l'intérieur de leur coulisse 80D et 80G, fixe par rapport au bras 14D et 14G. Les coulisseaux 78D et 78G décrivent alors des couses respectives en hélice, combinant un mouvement de translation vers l'avant et une rotation de 90° respectivement autour des axes X_{14D}-X_{14D} et X_{14G}-X_{14G}. Il en résulte que les roues arrière 22D et 22G passent de leur position des figures 1 et 2 à leur position escamotée des figures 3 et 4, dans laquelle les axes de rotation Y_{22D}-Y_{22D} et Y_{22G}-Y_{22G} s'étendent parallèlement au plan P, étant remarqué que les roues arrière demeurent symétriques l'une de l'autre par rapport au plan P durant tout leur escamotage.

Les corps 22D₂ et 22G₂ des roues arrière 22D et 22G s'étendent alors globalement dans un même plan perpendiculaire au plan P, autorisant le roulement du châssis 2 sur le sol S par rotation des deux roues arrière autour de leur axe Y_{22D}-Y_{22D}, Y₂₂₀-Y₂₂₆. Le cas échéant, le châssis de poussette 2 est alors verrouillé dans cette configuration par un moyen de blocage ad hoc, tel qu'une goupille. Le châssis de poussette 2 est alors déplaçable de manière stable à la façon d'un bagage-trolley avec son bras avant 12 et la poignée 60 dirigés vers le haut, de sorte que cette poignée peut être saisie par l'utilisateur pour entraîner en déplacement le châssis de poussette pour le ranger à la verticale, en le roulant dans un placard par exemple. De manière particulièrement pratique, on comprend que lorsque l'utilisateur se saisit de la poignée 60 alors que les roues sont déployées et qu'il sollicite cette poignée pour escamoter les roues comme décrit plus haut, l'utilisateur utilise concommittemment cette poignée pour redresser le châssis de poussette à la verticale de façon à amener automatiquement le châssis dans sa position stable d'appui sur ses roues arrière.

En outre, en raison de la course hélicoïdale du mouvement d'escamotage des roues arrière 22G et 22D, on comprend que la distance Δ entre l'axe de rotation Y₂₀-Y₂₀ de la roue avant 20 et l'axe de rotation Y_{22D}-Y_{22D}, Y_{22G}-Y_{22G} de chaque roue arrière 22D, 22G varie de la dimension antéro-postérieure de la partie des coulisseaux 78D et 78G escamotée à l'intérieur de leur coulisse correspondante 80D, 80G, ce qui peut atteindre en pratique 40 mm. Par conséquent, la dimension antéro-postérieure totale du châssis de poussette 2 est diminuée lorsque les roues sont escamotées.

Bien entendu, la commande par la poignée 60 de l'entraînement en rotation sur 90° de l'arbre 34 en sens inverse de celui considéré ci-dessus, alors que les roues 20, 22D et 20G sont initialement escamotées, provoquent, par une transmission de mouvements inverses, le déploiement concomitant de ces trois roues.

En option, une partie longitudinale de chaque corde 82D, 82G est avantageusement constituée d'un alliage métallique à mémoire de forme, tel que l'alliage à base de nickel et titane, commercialisé par la société NIMESIS (France) de sorte que cette partie de corde est apte à être tordue, voire pliée sans dommage, par déformation élastique transversale, lorsque l'utilisateur commande l'escamotage ou le déploiement des roues alors que celui-ci est malencontreusement empêché, par exemple suite au coincement d'une roue contre un mur. De cette façon, l'endommagement du reste de la corde est évité, ce qui pourrait avoir des conséquences dommageables pour la bonne transmission des efforts de traction et de poussée que doit normalement assurer cette corde.

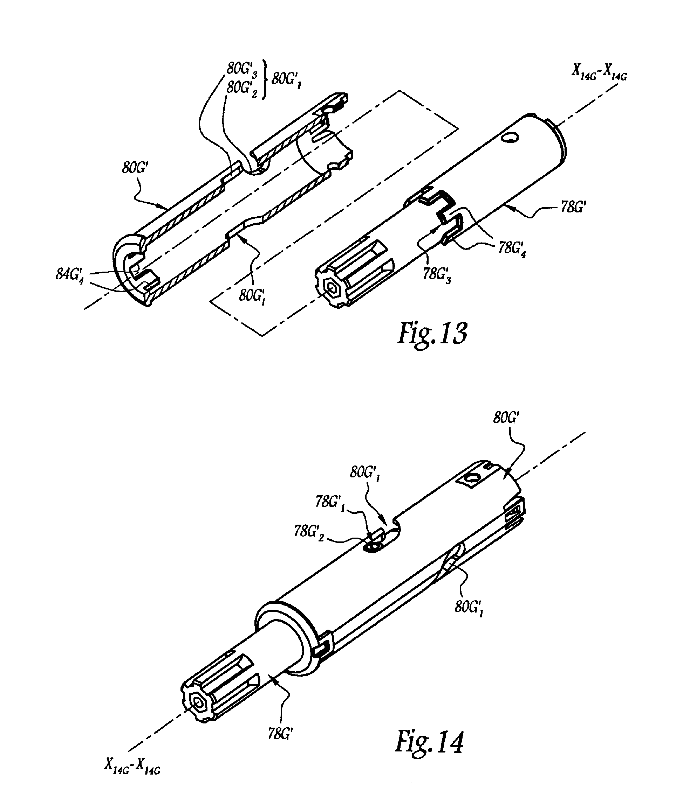

Sur les figures 13 et 14 est représentée une variante de réalisation des coulisseaux 78D et 78G et des coulisses 80G et 80D du châssis de poussette 2. On décrit en détail ci-après les aménagements correspondants de cette variante pour le côté gauche du châssis de poussette 2, étant entendu que les aménagements du côté droit se déduisent par symétrie par rapport au plan P.

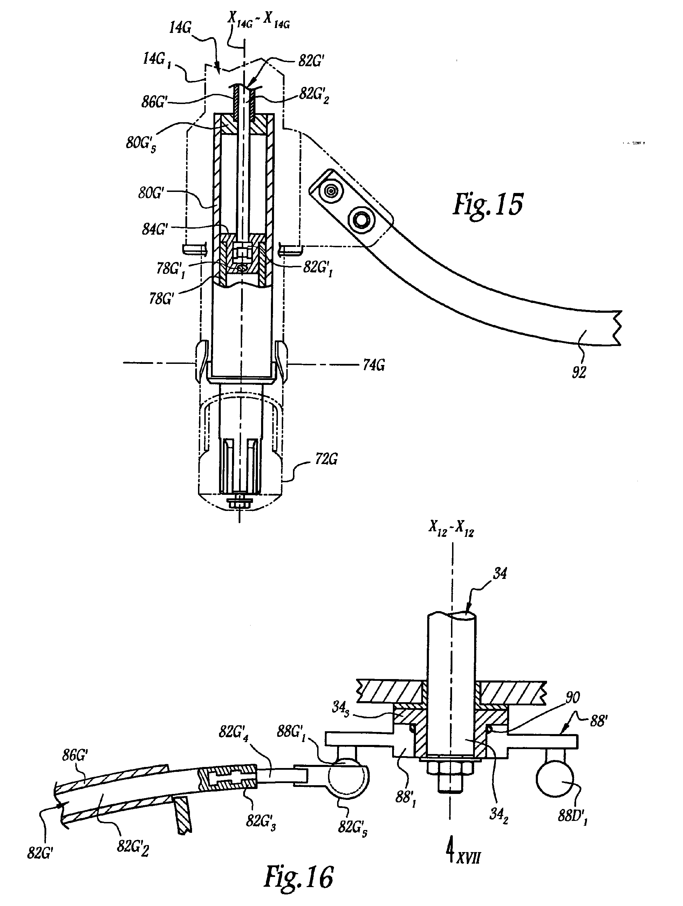

Ainsi, selon cette variante des figures 13 et 14, on remplace le coulisseau 78G et la coulisse 80G par respectivement un coulisseau 78G' et une coulisse 80G'. L'agencement, au sein du châssis de poussette 2, et la fonction de ce coulisseau 78G' et de cette coulisse 80G' sont similaires à l'agencement et à la fonction du coulisseau 78G et de la coulisse 80G : en particulier, le coulisseau 78G' est agencé co-axialement à l'intérieur du fourreau 72G, comme représenté de manière schématique sur la figure 15, en étant lié rigidement à ce fourreau 72G au niveau de leur extrémité arrière, tandis que la coulisse 80G' est agencée fixement à l'intérieur de la partie rectiligne 14G₁ du bras 14G, également comme montré sur la figure 15.

Le coulisseau 78G' et la coulisse 80G' se distinguent essentiellement du coulisseau 78G et de la coulisse 80G par des aménagements relatifs au guidage du coulisseau 78G' à l'intérieur de la coulisse 80G' suivant globalement un mouvement hélicoïdal centré sur l'axe X_{14G}-X_{14G} du bras 14G. En effet, en remplacement des nervures et rainures hélicoïdales utilisées dans le mode de réalisation des figures 1 à 12, la paroi tubulaire de la coulisse 80G' est traversée, de part en part, par deux fentes 80G'₁ diamétralement opposées, de manière symétrique par rapport à l'axe X_{14G}-X_{14G}. Chaque rainure 80G'₁ inclut, suivant sa longueur, une partie d'extrémité avant 80G'₂ hélicoïdale, centrée sur l'axe X_{14G}-X_{14G}, et une partie d'extrémité arrière 80G'₃ rectiligne, parallèle à cet axe. A l'état assemblé du coulisseau 78G' à l'intérieur de la coulisse 80G', chacune de ces rainures 80G'₁ reçoit une des extrémités longitudinales d'une goupille transfixiante 78G'₁ liée rigidement au coulisseau 78G', en s'étendant perpendiculairement à l'axe X_{14G}-X_{14G}, l'une des extrémités longitudinales de cette goupille 78G'₁ étant visible sur la figure 14, en étant référencée 78G'₂. La largeur de chaque rainure 80G'₁ est ajustée sur celle des extrémités 78G'₂ de la goupille 78G'₁, de sorte que, lors du déplacement relatif entre le coulisseau 78G' et la coulisse 80G', le mouvement correspondant est constitué successivement d'un premier sous-mouvement hélicoïdal, lorsque les extrémités 78G'₂ de la goupille 78G'₁ parcourent la partie hélicoïdale 80G'₂ des rainures 80G'₁, et d'un second sous-mouvement rectiligne lorsque les extrémités précitées parcourent la partie rectiligne 80G'₃ des rainures.

Ainsi, par coopération de la goupille 78G'₁ et des parties hélicoïdales 80G'₂ des rainures 80G'₁, on retrouve le guidage antéro-postérieur entre le coulisseau 78G' et la coulisse 80G' suivant un mouvement hélicoïdal, sensiblement comme pour le mode de réalisation des figures 1 à 12. En outre, par coopération entre la goupille 78G'₁ et les parties rectilignes 80G'₃ des rainures 80G'₁, la position angulaire relative entre le coulisseau 78G' et la coulisse 80G' se trouve fixée : cette configuration correspond au placement arrière extrême du coulisseau 78G' par rapport à la coulisse 80G', comme montré à la figure 14, c'est-à-dire à la configuration dans laquelle les roues arrière 22G et 22D sont déployées. La tenue mécanique de ces roues en configuration déployée s'en trouve ainsi améliorée.

Avantageusement, cette tenue mécanique est renforcée par la présence, à la surface extérieure du coulisseau 78G', d'une couronne crénelée 78G'₃, comprenant une pluralité de nervures axiales 78G'₄ qui sont réparties suivant la périphérie extérieure du coulisseau et qui sont conformées pour être reçues de manière complémentaire dans des rainures axiales 80G'₄ creusées dans la face intérieure de la coulisse 80G', ici au niveau de l'extrémité arrière de cette coulisse. Moyennant un dimensionnement adéquat, ces nervures 78G'₄ et ces rainures 80G'₄ se mettent progressivement en prise axiale les unes avec les autres lorsque la goupille 78G'₁ parcourt les parties rectilignes 80G'₃ des rainures 80G'₁, depuis l'extrémité avant de ces parties rectilignes vers leur extrémité arrière. Les efforts appliqués alors à un moyen de verrouillage ad hoc, bloquant le châssis de poussette 2 avec ses roues en configuration déployée, restent ainsi limités et supportés par ce moyen de blocage, sans endommagement.

A titre d'aménagement avantageux optionnel, non représenté en détail sur les figures, les parties hélicoïdales 80G'₂ des rainures 80G'₁ sont prolongées vers l'avant par des parties de rainure rectilignes, qui n'ont pas à être aussi longues que les parties rectilignes arrière 80G'₃ et qui permettent de stabiliser la position angulaire relative entre le coulisseau 78G' et la coulisse 80G' lorsque la roue arrière correspondante 22G est escamotée, en étant rabattue contre l'ossature 10 comme expliqué plus haut. La tenue aux efforts appliqués ensuite au châssis de poussette 2 ainsi replié s'en trouve améliorée.

Sur les figures 15 et 16 est représentée une autre variante de réalisation du châssis de poussette 2, qui, mis à part ce qui vient d'être décrit en regard des figures 13 et 14, se distingue du mode de réalisation décrit en regard des figures 1 à 12 essentiellement par la structure, détaillée ci-après, des moyens d'entraînement des coulisseaux 78D et 78G ou 78D' et 78G' par rapport à leur bras arrière correspondant 14D et 14G, ainsi qu'accessoirement par de légères modifications des contours de certains composants associés à ces bras arrière, sans toutefois que ces légères modifications n'induisent de différences structurelles et fonctionnelles significatives.

Ainsi, plutôt que d'entraîner chaque coulisseau 78D, 78G par la corde de traction et de poussée 82D ou 82G comme décrit en regard des figures 8 et 9, la variante des figures 15 et 16 prévoit d'utiliser un actionneur sous forme d'une tige semi-rigide 82D' ou 82G', étant remarqué que seule la tige 82G' associée au bras arrière gauche 14G est visible sur les figures 15 et 16. D'ailleurs, on décrit plus en détail ci-après les aménagements correspondants pour le côté gauche du châssis de poussette 2, étant entendu que les aménagements du côté droit se déduisent par symétrie par rapport au plan P.

Ainsi, en regard des figures 15 et 16, la tige semi-rigide 82G' lie en mouvement le coulisseau 78G' et l'extrémité arrière 34₂ de l'arbre 34. A cet effet, l'extrémité arrière 82G'₁ de cette tige est solidarisée fixement à une tête d'extrémité avant 84G' du coulisseau 78G', ici en présentant une forme renflée, reçue et retenue dans un logement complémentaire délimité à l'intérieur de la tête 84G'. Avantageusement, la fixation de la tête 84G' par rapport au coulisseau 78G' est réalisée par la goupille transfixiante 78G'₁.

La partie courante 82G'₂ de la tige semi-rigide 82G' est reçue dans une gaine 86G' fonctionnellement analogue à la gaine 86G : cette gaine 86G' est ainsi intégrée fixement à l'intérieur du bras 14G, avec en particulier son extrémité arrière coincée dans un embout d'extrémité avant fixe 80G'₅ de la coulisse 80G' tandis que cet embout est traversé de part en part par la tige 82G'. La flexibilité de la partie courante de tige 82G'₂ est mise à profit, d'une part, pour adapter le profil longitudinal global de la tige 82G' à la partie coudée 14G₂ du bras 14G, en cintrant ce profil, et, d'autre part, pour supporter, sans endommagement, une légère torsion de la tige 82G', liée au mouvement en hélice du coulisseau 78G'. Il résulte de ce dernier aspect que la liaison mécanique entre la tige 82G' et le coulisseau 78G' n'a pas à être aussi élaborée que celle entre la corde 82G et le coulisseau 78G, notamment sans nécessité la présence d'un petit embout sphérique prévu à l'extrémité arrière de cette corde.

A titre d'exemple, pour obtenir une flexibilité suffisante de la partie courante de tige 82G'₂, tout en garantissant une transmission d'effort suffisante par cette partie courante de tige, suivant la direction longitudinale de cette dernière, cette partie courante 82G'₂ présente une section transversale en forme de croix et est réalisée en un matériau synthétique, tel que du nylon.

L'extrémité avant 82G'₃ de la tige 82G' est rigidement munie d'un insert 82G'₄, par exemple surmoulé avec l'extrémité avant de la tige, comme représenté sur la figure 16. A son extrémité opposée à la tige 82G', cet insert 82G'₄ est fixé à un volant 88', agencé à l'extrémité arrière 34₂ de l'arbre 34 et fonctionnellement analogue au volant 88 montré sur les figures 11 et 12. Dans l'exemple de réalisation considéré à la figure 16, le volant 88', centré sur l'axe X₁₂-X₁₂, est pourvu, en des zones diamétralement opposées par rapport à cet axe, de deux sphères saillantes 88G'₁ et 88D'₁, conçues pour être respectivement reçues, à la façon d'un joint de rotule, dans une coquille complémentaire 82G'₅ portée rigidement par l'insert 82G'₄ de l'extrémité arrière de la tige gauche 82G' ou droite 82D' correspondante.

Ainsi, comme pour le volant 88, la mise en rotation du volant 88' par l'arbre 34, sur une course de 90° centrée sur l'axe X₁₂-X₁₂, provoque, selon le sens de cette rotation, soit la traction vers l'avant, soit la poussée vers l'arrière des tiges semi-rigides 82G' et 82D' en vue d'actionner le mouvement des coulisseaux 78G' et 78D' à l'intérieur de leur coulisse 80G' et 80D'. Par comparaison aux cordes 82G et 82D, les tiges d'actionnement 82G' et 82D' présentent l'avantage d'être des composants mécaniques standard et largement disponibles dans le commerce, qui supportent, sans endommagement, la transmission des efforts nécessaires au déploiement et à l'escamotage des roues arrière 22G et 22D.

Sur les figures 16 à 19 est représentée encore une autre variante de réalisation du châssis de poussette 2, qui concerne spécifiquement la liaison mécanique entre l'extrémité arrière 34₂ de l'arbre 34 et le volant 88 ou 88', cette variante étant appliquée ici au volant 88' et détaillée ainsi ci-après dans ce contexte. Plutôt que d'assembler rigidement ce volant à l'extrémité arrière 34₂ de l'arbre 34 comme dans le mode de réalisation considéré aux figures 1 à 12, un ressort 90 de type fer à cheval est interposé entre eux afin de limiter l'intensité du couple transmis entre le volant 88' et l'extrémité d'arbre 34₂.

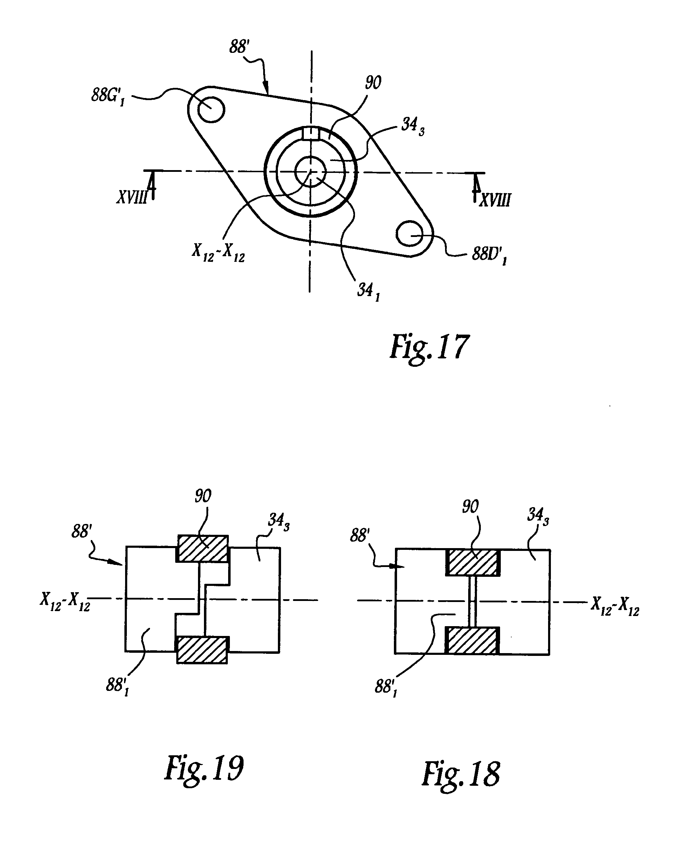

Plus précisément, ce ressort 90 est conformé pour enserrer, de manière centrée sur l'axe X₁₂-X₁₂, une douille 34₃ liée rigidement à l'extrémité d'arbre 34₂ et la région centrale 88'₁ du volant 88' : la raideur du ressort 90 est dimensionnée pour bloquer en rotation l'une avec l'autre la douille 34₃ et la région de volant 88'₁, autour de l'axe X₁₂-X₁₂, tant que l'intensité du couple transmis entre ces deux pièces est inférieure à une valeur limite prédéterminée, comme représenté sur la figure 18. De cette façon, si un couple relatif, autour de l'axe X₁₂-X₁₂, entre l'arbre 34 et le volant 88 est appliqué avec une intensité supérieure à la valeur limite précitée, le ressort 90 se déforme de manière élastique pour autoriser une libre rotation relative de l'arbre 34 sur lui-même et du volant 88' sur lui-même, comme représenté sur la figure 19.

De cette façon, lorsque l'utilisateur commande l'escamotage ou le déploiement des roues du châssis de poussette 2 par la poignée 60, alors que cet escamotage ou ce déploiement est malencontreusement empêché au niveau d'une des roues arrière 22G et 22D, par exemple suite au coincement de cette roue contre un mur, la résistance cinématique de cette roue induit, au niveau du volant 88', un différentiel de couple autour de l'axe X₁₂-X₁₂ par rapport à l'arbre 34 : si l'intensité de ce différentiel de couple est supérieure à la valeur limite précitée, l'utilisateur poursuit l'entraînement rotatif de l'arbre 34 sans que l'effort correspondant ne soit transmis au volant 88' et aux tiges 82G' et 82D' grâce au ressort 90, évitant ainsi l'endommagement de ce volant et de ces tiges.

Divers aménagements et variantes au châssis de poussette 2 décrit jusqu'ici peuvent en outre être envisagés. A titre d'exemples :
- chaque roue 20, 22D et 22G ou au moins l'une de ces roues peut être équipée d'un moyen de blocage en rotation, en vue d'immobiliser le châssis de poussette 2 sur le sol S à des fins de stationnement pendant un certain temps ;
- la roue avant 20 et/ou chacune des roues arrière 22D et 22G peuvent être remplacées par une paire de roues jumelées, voire un train de roues jumelées ;
- par ailleurs, pour relier la roue avant 20 au bras 12, la patte 30 peut être remplacée par une fourche dont les deux branches s'étendent de part et d'autre du corps de roue 20₂ ;
- de manière optionnelle, la mise en rotation de l'arbre 34 par la poignée 60 lors de l'escamotage ou de déploiement des roues peut être transmise, par des aménagements appropriés, au cadre 4 de la poussette, notamment afin d'assister respectivement le pliage et l'ouverture de ce cadre par rapport au châssis ; et/ou
- également de manière optionnelle, la structure du châssis de poussette 2 peut être renforcée par une traverse reliant rigidement les bras arrière 14D et 14G, en particulier au niveau de leur partie rectiligne 14D₁ et 14G₁ ; par exemple, les extrémités opposées d'une telle traverse sont solidarisées fixement à des capotages fixes respectifs habillant extérieurement les parties de bras 14D₁ et 14G₁, comme partiellement représenté sur la figure 15, sur laquelle la traverse précitée est référencée 92.

## Revendications

1. Châssis de poussette (2), notamment pour transporter un enfant, comportant :
- deux bras arrière (14D, 14G) et un unique bras avant (12), qui sont solidarisés fixement les uns aux autres et respectivement munis d'au moins une roue (20, 22D, 22G) d'appui sur le sol (S), **caractérisée par**
- des moyens mécaniques de déplacement des roues arrière et avant par rapport à leur bras respectif, adaptés pour déplacer, par transmission mécanique, simultanément toutes les roues entre respectivement une position déployée de service, dans laquelle, à la fois, les axes de rotation (Y₂₀-Y₂₀, Y_{22D}-Y_{22D}, Y_{22G}-Y_{22G}) de toutes les roues s'étendent sensiblement perpendiculairement à un même plan médian antéro-postérieur (P) du châssis et la ou les roues avant sont écartées des roues arrière par une première distance antéro-postérieure, et une position escamotée de stockage, dans laquelle, à la fois, les axes de rotation de toutes les roues s'étendent sensiblement parallèlement à ce plan et la ou les roues avant sont écartées des roues arrière par une seconde distance antéro-postérieure qui est plus petite que la première distance antéro-postérieure, et par
- une poignée spécifique (60) d'entraînement manuel des moyens de déplacement, agencée à l'extrémité avant du bras avant (12).

2. Châssis de poussette suivant la revendication 1, **caractérisé en ce que**, lorsque les roues arrière (22D, 22G) sont dans leur position escamotée, elles s'étendent sensiblement dans un même plan perpendiculaire au plan médian antéro-postérieur (P) du châssis et sont aptes à rouler sur le sol (S) dans ce même plan.

3. Châssis de poussette suivant l'une des revendications 1 ou 2, **caractérisé en ce que** les moyens de déplacement comportent un arbre principal (34) qui est supporté par le bras avant (12) de façon à pouvoir tourner sur lui-même et dont l'extrémité avant (34₁) est liée cinématiquement, à la fois, à la poignée (60) et au moyeu de la ou chaque roue avant (20), tandis que l'extrémité arrière (34₂) de cet arbre est liée cinématiquement au moyeu de chaque roue arrière (22D, 22G).

4. Châssis de poussette suivant la revendication 3, **caractérisé en ce que** la poignée (60) est liée rigidement à l'extrémité avant (34₁) de l'arbre principal (34), notamment en étant venu de matière avec cette extrémité.

5. Châssis de poussette suivant l'une des revendications 3 ou 4, **caractérisé en ce que** le moyeu de la ou chaque roue avant (20) est lié fixement à une patte (30) ou une fourche, reliée à l'extrémité avant (34₁) de l'arbre principal (34) par un ensemble d'articulation mécanique (32) qui comporte, d'une part, une articulation de pivot (38) définissant un axe (Z-Z) transversal à l'arbre principal, autour duquel la patte ou la fourche et l'arbre principal pivotent librement l'un par rapport à l'autre et, d'autre part, des moyens (40, 42) de blocage de cette articulation, pour lier rigidement la patte ou la fourche et l'arbre de telle sorte que l'axe de rotation (Y₂₀-Y₂₀) de la roue avant s'étend de manière sensiblement orthoradiale à l'arbre principal.

6. Châssis de poussette suivant la revendication 5, **caractérisé en ce que** l'ensemble d'articulation (32) est supporté par un embout (36) lié rigidement à l'extrémité avant (34₁) de l'arbre principal (34), la poignée (60) présentant la forme d'un arceau qui s'étend essentiellement le long d'une portion périphérique avant de l'embout, en délimitant entre eux un espace de réception des doigts d'une main d'un utilisateur.

7. Châssis de poussette suivant l'une des revendications 5 ou 6, **caractérisé en ce que** les moyens de blocage (40, 42) sont commandés par un enjoliveur (52) mobile par rapport à l'extrémité avant (34₁) de l'arbre principal (34), cet enjoliveur recouvrant l'articulation de pivot (38).

8. Châssis de poussette suivant l'une quelconque des revendications précédente, **caractérisé en ce que** les moyens de déplacement comportent, pour chaque roue arrière (22D, 22G), d'une part, un coulisseau (78D, 78G ; 78D', 78G') lié fixement au moyeu de la roue arrière et monté de manière mobile dans une coulisse (80D, 80G ; 80D', 80G') qui est solidaire du bras arrière correspondant (14D, 14G) et qui est adapté pour guider le coulisseau selon la direction antéro-postérieure suivant un mouvement hélicoïdal et, d'autre part, des moyens de traction et de poussée (82D, 82G ; 82D', 82G') liant en mouvement le coulisseau et l'extrémité arrière (34₂) de l'arbre principal (34).

9. Châssis de poussette suivant la revendication 8, **caractérisé en ce que**, pour chaque noue arrière (22D, 22G), la coulisse (80D'. 80G') délimite au moins une rainure (80D'₁, 80G'₁) de réception d'un élément complémentaire (78D'₁, 78G'₁) qui est solidaire du coulisseau (78D', 78G') pour guider le coulisseau selon la direction antéro-postérieure, cette rainure incluant successivement une partie avant hélicoïdale (80D'₂, 80G'₂) et une partie arrière rectiligne (80D'₃, 80G'₃).

10. Châssis de poussette suivant la revendication 9, **caractérisé en ce que**, pour chaque roue arrière (22D, 22G), le coulisseau (78G', 78D') et la coulisse (80D', 80G') comprennent des parties respectives axialement nervurée (78D'₄, 78G'₄) et rainurée (80D'₄,80G'₄), qui sont adaptées pour coopérer l'une avec l'autre par complémentarité de formes lorsque l'élément complémentaire (78D'₁, 78G'₁) solidaire du coulisseau est reçu dans la partie arrière rectiligne (80D'₃, 80G'₃) de la rainure (80D'₁, 80G'₁).

11. Châssis de poussette suivant l'une quelconque des revendications 8 à 10, **caractérisé en ce que** lesdits moyens de traction et de poussée consistent, pour chaque roue arrière (22D, 22G), en une corde de traction et de poussée (82D, 82G) reliant le coulisseau (78D, 78G) et l'extrémité arrière (34₂) de l'arbre principal (34).

12. Châssis de poussette suivant la revendication 11, **caractérisé en ce qu'**au moins une partie de chaque corde de traction et de poussée (82D, 80G) est constituée d'un alliage métallique à mémoire de forme.

13. Châssis de poussette suivant l'une quelconque des revendications 8 à 10, **caractérisé en ce que** lesdits moyens de traction et de poussée comportent, pour chaque roue arrière (22D, 22G), une tige d'actionnement semi-rigide (82D', 82G'), conformée pour transmettre des efforts de traction et de poussée entre le coulisseau (78D', 78G') et l'extrémité arrière (34₂) de l'arbre principal (34) suivant la direction longitudinale de cette tige, tout en étant déformable élastiquement par cintrage.

14. Châssis de poussette suivant l'une quelconque des revendications 11 à 13, **caractérisé en ce que** les moyens de déplacement comportent un volant (88 ; 88') qui est lié rigidement et coaxialement à l'extrémité arrière (34₂) de l'arbre principal (34) et sur lequel sont fixées, de manière diamétralement opposée, les extrémités arrière respectives (82D₂, 82G₂; 82D'₁, 82G'₁) soit des cordes de traction et de poussées (82D, 82G), soit des tiges d'actionnement (82D', 82G').

15. Châssis de poussette suivant la revendication 14, **caractérisé en ce qu'**un moyen de limitation de couple (90), en particulier un ressort de type fer à cheval, est interposé entre le volant (88 ; 88') et l'extrémité arrière (34₂) de l'arbre principal (34).

## Patentansprüche

1. Sportwagengestell (2), insbesondere für den Transport eines Kindes, umfassend:
- zwei hintere Arme (14D, 14G) und einen einzigen vorderen Arm (12), die fest miteinander verbunden sind und jeweils mit mindestens einem Rad (20, 22D, 22G) zum Abstützen auf dem Boden (S) versehen sind,
**gekennzeichnet durch**
- mechanische Mittel zur Bewegung der hinteren und vorderen Räder in Bezug auf ihren jeweiligen Arm, die angepasst sind, **durch** mechanische Übertragung gleichzeitig alle Räder zwischen jeweils einer entfalteten Betriebsstellung, in der sowohl die Drehachsen (Y₂₀-Y₂₀, Y_{22D}-Y_{22D}, Y_{22G}-Y_{22G}) von allen Rädern sich im Wesentlichen senkrecht zu einer selben antero-posterioren Mittelebene (P) des Gestells erstrecken und das oder die Vorderräder von den Hinterrädern **durch** eine erste antero-posteriore Entfernung beabstandet sind, und einer zusammengefalteten Lagerstellung, in der sowohl die Drehachsen aller Räder sich im Wesentlichen parallel zu dieser Ebene erstrecken als auch das oder die Vorderräder von den Hinterrädern **durch** eine zweite antero-posteriore Entfernung beabstandet sind, die kleiner als die erste antero-posteriore Entfernung ist und **durch**
- einen spezifischen Griff (60) zur manuellen Betätigung der Bewegungsmittel, der am Vorderende des vorderen Arms (12) angeordnet ist.

2. Sportwagengestell nach Anspruch 1, **dadurch gekennzeichnet, dass**, wenn die Hinterräder (22D, 22G) in ihrer zusammengefalteten Stellung sind, sie sich im Wesentlichen in einer selben Ebene senkrecht zur antero-posterioren Mittelebene (P) des Gestells erstrecken und angepasst sind, in dieser selben Ebene auf dem Boden (S) zu rollen.

3. Sportwagengestell nach einem der Ansprüche 1 oder 2, **dadurch gekennzeichnet, dass** die Bewegungsmittel eine Hauptwelle (34) aufweisen, die von dem Vorderarm (12) derart gelagert ist, dass sie sich um sich selbst drehen kann und deren Vorderende (34₁) kinematisch sowohl mit dem Griff (60) als auch mit der Nabe des oder jedes Vorderrades (20) verbunden ist, während das Hinterende (34₂) dieser Welle kinematisch mit der Nabe jedes Hinterrads (22D, 22G) verbunden ist.

4. Sportwagengestell nach Anspruch 3, **dadurch gekennzeichnet, dass** der Griff (60) starr mit dem Vorderende (34₁) der Hauptwelle (34) verbunden ist, insbesondere aus einem Stück mit diesem Ende hergestellt ist.

5. Sportwagengestell nach einem der Ansprüche 3 oder 4, **dadurch gekennzeichnet, dass** die Nabe des oder jedes Vorderrades (20) fest mit einem Schenkel (30) oder einer Gabel verbunden ist, der bzw. die mit dem Vorderende (34₁) der Hauptwelle (34) durch eine mechanische Gelenkanordnung (32) verbunden ist, die einerseits ein Schwenkgelenk (38), das eine quer zur Hauptwelle liegende Achse (Z-Z) definiert, um die der Ansatz oder die Gabel und die Hauptwelle frei zueinander schwenken, und andererseits Mittel (40, 42) zur Blockierung dieses Gelenks aufweist, um starr den Schenkel oder die Gabel und die Welle derart zu verbinden, dass die Drehachse (Y₂₀-Y₂₀) des Vorderrades sich in einer im Wesentlichen orthoradialen Weise zur Hauptwelle erstreckt.

6. Sportwagengestell nach Anspruch 5, **dadurch gekennzeichnet, dass** die Gelenkanordnung (32) von einem Ansatz (36) getragen wird, der starr mit dem Vorderende (34₁) der Hauptwelle (34) verbunden ist, wobei der Griff (60) die Form eines Bügels aufweist, der sich im Wesentlichen entlang eines vorderen Umfangsbereichs des Ansatzes erstreckt, wobei zwischen ihnen ein Raum zur Aufnahme von Fingern einer Hand eines Benutzers begrenzt wird.

7. Sportwagengestell nach einem der Ansprüche 5 oder 6, **dadurch gekennzeichnet, dass** die Blockiermittel (40, 42) durch eine in Bezug auf das Vorderende (34₁) der Hauptwelle (34) bewegliche Kappe (52) gesteuert werden, wobei diese Kappe das Schwenkgelenk (38) überdeckt.

8. Sportwagengestell nach einem beliebigen der vorhergehenden Ansprüche, **dadurch gekennzeichnet, dass** die Bewegungsmittel für jedes Hinterrad (22D, 22G) einerseits ein Gleitstück (78D, 78G; 78D', 78G'), das fest mit der Nabe des Hinterrades verbunden ist und in beweglicher Weise in einer Führungsschiene (80D, 80G; 82D', 80G') beweglich montiert ist, die mit dem korrespondierenden hinteren Arm (14D, 14G) verbunden ist und die ausgebildet ist, das Gleitstück gemäß der antero-posterioren Richtung mit einer spiralförmigen Bewegung zu führen und andererseits Zug- und Schubmittel (82D, 82G; 82D', 82G') umfassen, die das Gleitstück und das Hinterende (34₂) der Hauptwelle (34) bewegungsmäßig verbinden.

9. Sportwagengestell nach Anspruch 8, **dadurch gekennzeichnet, dass** für jedes Hinterrad (22D, 22G) die Führungsschiene (80D', 80G') mindestens eine Nut (80D'₁, 80G'₁) zur Aufnahme eines komplementären Elements (78D'₁, 78G'₁) begrenzt, das mit dem Gleitstück (78D', 78G') verbunden ist, um das Gleitstück gemäß der antero-posterioren Richtung zu führen, wobei diese Nut aufeinanderfolgend ein schraubenförmiges Vorderteil (80D'₂, 80G'₂) und ein geradliniges hinteres Teil (80D'₃, 80G'₃) einschließt.

10. Sportwagengestell nach Anspruch 9, **dadurch gekennzeichnet, dass** für jedes Hinterrad (22D, 22G) das Gleitstück (78G', 78D') und die Führungsschiene (80D', 80G') jeweils ein axial geripptes (78D'₄, 78G'₄) und ein axial genutetes (80D'₄, 80G'₄) Teil umfassen, die angepasst sind, um durch Formenschluss miteinander zusammenzuarbeiten, wenn das mit dem Gleitstück verbundene komplementäre Element (78D'₁, 78G'₁) in dem geradlinigen hinteren Teil (80D'₃, 80G'₃) der Nut (80D'₁, 80G'₁) aufgenommen ist.

11. Sportwagengestell nach einem beliebigen der Ansprüche 8 bis 10, **dadurch gekennzeichnet, dass** die Zug- und Schubmittel für jedes Hinterrad (22D, 22G) aus einem Zug- und Schubseil (82D, 82G) bestehen, das das Gleitstück (78D, 78G) und das Hinterende (34₂) der Hauptwelle (34) miteinander verbindet.

12. Sportwagengestell nach Anspruch 11, **dadurch gekennzeichnet, dass** mindestens ein Teil jedes Zug- und Schubseils (82D, 80G) aus einer Me-talllegierung mit Formengedächtnis besteht.

13. Sportwagengestell nach einem beliebigen der Ansprüche 8 bis 10, **dadurch gekennzeichnet, dass** die Zug- und Schubmittel für jedes Hinterrads (22D, 22G) einen halbstarren Betätigungsstab (82D', 82G') aufweisen, der ausgebildet ist, Zug- und Schubkräfte zwischen dem Gleitstück (78D', 78G') und dem Hinterende (34₂) der Hauptwelle (34) gemäß der Längsrichtung dieses Stabes zu übertragen, wobei er elastisch durch Biegen verformbar ist.

14. Sportwagengestell nach einem beliebigen der Ansprüche 11 bis 13, **dadurch gekennzeichnet, dass** die Bewegungsmittel ein Lenkrad (88; 88') aufweisen, das starr und koaxial mit dem Hinterende (34₂) der Hauptwelle (34) verbunden ist und auf dem in diametral entgegengesetzter Weise die jeweiligen hinteren Enden (82D₂, 82G₂; 82D'₁, 82G'₁) der Zug- oder Schubseile (82D, 82G) oder der Betätigungsstäbe (82D', 82G') befestigt sind.

15. Sportwagengestell nach Anspruch 14, **dadurch gekennzeichnet, dass** ein Mittel zur Begrenzung des Drehmoments (90), insbesondere eine Hufeisenfeder zwischen dem Lenkrad (88; 88') und dem Hinterende (34₂) der Hauptwelle (34) angeordnet ist.

## Claims

1. A stroller frame (2) particularly for transporting a child, comprising:
- two rear arms (14D, 14G) and a single front arm (12), which are fixedly joined to one another and respectively provided with at least one wheel (20, 22D, 22G) bearing on the ground (S),
**characterized by**
- movement mechanical means for moving the rear and front wheels relative to their respective arms, suitable for simultaneously moving, by mechanical transmission, all the wheels between, respectively, an extended service position, in which both the rotation axes (Y₂₀-Y₂₀, Y_{22D}-Y_{22D}, Y_{22G}-Y_{22G}) of all the wheels extend substantially perpendicularly to the same antero-posterior median plane (P) of the frame and the front wheel or wheels are spaced from the rear wheels by a first antero-posterior distance, and a retracted storage position, in which both the rotation axes of all the wheels extend substantially parallel to this plane, and the front wheel or wheels are spaced from the rear wheels by a second antero-posterior distance that is smaller than the first antero-posterior distance, and by
- a specific handle (60) for manually driving the movement means, arranged at the front end of the front arm (12).

2. The stroller frame as claimed in claim 1, **characterized in that**, when the rear wheels (22D, 22G) are in their retracted position, they extend substantially in the same plane perpendicular to the antero-posterior median plane (P) of the frame and are able to roll on the ground (S) in this same plane.

3. The stroller frame as claimed in one of claims 1 and 2, **characterized in that** the movement means comprise a main shaft (34) which is supported by the front arm (12) so as to be able to rotate on said front arm and the front end (34₁) of which is kinematically linked, both to the handle (60) and to the hub of the or each front wheel (20), whereas the rear end (34₂) of this shaft is kinematically linked to the hub of each rear wheel (22D, 22G).

4. The stroller frame as claimed in claim 3, **characterized in that** the handle (60) is rigidly linked to the front end (34₁) of the main shaft (34), notably consisting of a single piece with this end.

5. The stroller frame as claimed in one of claims 3 and 4, **characterized in that** the hub of the or each front wheel (20) is fixedly linked to a leg (30) or a fork, connected to the front end (34₁) of the main shaft (34) by a mechanical articulation assembly (32) which comprises both a pivot articulation (38) defining an axis (Z-Z) transversal to the main shaft, around which the leg or the fork and the main shaft pivot freely relative to one another, and immobilizing means (40, 42) for immobilizing this articulation and rigidly linking the leg or the fork and the shaft so that the rotation axis (Y₂₀-Y₂₀) of the front wheel extends substantially orthoradially to the main shaft.

6. The stroller frame as claimed in claim 5, **characterized in that** the articulation assembly (32) is supported by an end fitting (36) rigidly linked to the front end (34₁) of the main shaft (34), the handle (60) having the shape of a bow which extends mainly along a front peripheral portion of the end fitting, delimiting between them a space for receiving the fingers of a hand of a user.

7. The stroller frame as claimed in one of claims 5 and 6, **characterized in that** the immobilizing means (40, 42) are controlled by a trim (52) that is mobile relative to the front end (34₁) of the main shaft (34), this trim covering the pivot articulation (38).

8. The stroller frame as claimed in any one of the preceding claims, **characterized in that** the movement means comprise, for each rear wheel (22D, 22G), both a link block (78D, 78G; 78D', 78G') fixedly linked to the hub of the rear wheel and movably mounted in a slide (80D, 80G; 80D', 80G') which is joined to the corresponding rear arm (14D, 14G) and which is adapted to guide the link block in the antero-posterior direction by a helical movement, and pulling and pushing means (82D, 82G; 82D', 82G') which link movement-wise the link block and the rear end (34₂) of the main shaft (34).

9. The stroller frame as claimed in claim 8, **characterized in that**, for each rear wheel (22D, 22G), the slide (80D', 80G') delimits at least one groove (80D'₁, 80G'₁) for receiving a complementary element (78D'₁, 78G'₁) which is joined to the link block (78D', 78G') to guide the link block in the antero-posterior direction, this groove successively including a helical front portion (80D'₂, 80G'₂) and a rectilinear rear portion (80D'₃, 80G'₃).

10. The stroller frame as claimed in claim 9, **characterized in that**, for each rear wheel (22D, 22G), the link block (78G', 78D') and the slide (80D', 80G') comprise respective axially ribbed (78D'₄, 78G'₄) and grooved (80D'₄, 80G'₄) portions, which are adapted to cooperate with one another by complementarity of shapes when the complementary element (78D'₁, 78G'₁) joined to the link block is received in the rectilinear rear portion (80D'₃, 80G'₃) of the groove (80D'₁, 80G'₁).

11. The stroller frame as claimed in any one of claims 8 to 10, **characterized in that** said pulling and pushing means consist, for each rear wheel (22D, 22G), of a pulling and pushing cord (82D, 82G) connecting the link block (78D, 78G) and the rear end (34₂) of the main shaft (34).

12. The stroller frame as claimed in claim 11, **characterized in that** at least a portion of each pulling and pushing cord (82D, 80G) consists of a metal alloy with shape memory.

13. The stroller frame as claimed in any one of claims 8 to 10, **characterized in that** said pulling and pushing means comprise, for each rear wheel (22D, 22G), a semirigid actuation rod (82D', 82G') conformed to transmit pulling and pushing forces between the link block (78D', 78G') and the rear end (34₂) of the main shaft (34) in the longitudinal direction of this rod, while being elastically deformable by bending.

14. The stroller frame as claimed in any one of claims 11 to 13, **characterized in that** the movement means comprise a control wheel (88; 88') which is rigidly and coaxially linked to the rear end (34₂) of the main shaft (34) and to which are fixed, in a diametrically opposite manner, the respective rear ends (82D₂, 82G₂; 82D'₁, 82G'₁) either of the pulling and pushing cords (82D, 82G) or of the actuating rods (82D', 82G').

15. The stroller frame as claimed in claim 14, **characterized in that** a torque limiting means (90), in particular a horseshoe-type spring, is interposed between the control wheel (88; 88') and the rear end (34₂) of the main shaft (34).
